# EUROPEAN PATENT SPECIFICATION

(11) **EP 3 646 422 B1**
(45) Date of publication and mention of the grant of the patent: **30.11.2022**
(21) Application number: 18742415.5
(22) Date of filing: 28.06.2018
(51) Int. Cl.: H02B 3/00, H02B 7/00

(54) **ROBOT PROVIDED FOR UNMANNED OPERATION AND MAINTENANCE IN A SWITCHGEAR INSTALLATION**
ROBOTER FÜR MANNLOSER BETRIEB UND WARTUNG IN EINER SCHALTANLAGE
ROBOT POUR OPÉRATION ET MAINTENANCE SANS PERSONNEL DANS UNE INSTALLATION DE COMMUTATION

(30) Priority: 28.06.2017 EP 17178336; 21.12.2017 EP 17209473
(43) Date of publication of application: 06.05.2020
(73) Proprietor: ABB Schweiz AG, 5400 Baden (CH)
(72) Inventor: KOZEL, Tomas, 63500 Brno (CZ); SCHMIDTCHEN, Thomas, 97204 Höchberg (DE); STEFANKA, Martin, 664 61 Rajhrad (CZ)
(74) Representative: Wesch, Arno
(86) International application number: PCT/EP2018/067481
(87) International publication number: WO 2019/002504

(56) References cited:
- WO-A1-2015/081455
- US-A1- 2013 231 779
- US-A1- 2013 231 779
- US-A1- 2017 085 064
- JEAN-FRANCOIS ALLAN ET AL: "Robotic systems applied to power substations - A state-of-the-art survey", PROCEEDINGS OF THE 2014 3RD INTERNATIONAL CONFERENCE ON APPLIED ROBOTICS FOR THE POWER INDUSTRY, 1 January 2014 (2014-01-01), pages 1-6, XP055471456, DOI: 10.1109/CARPI.2014.7030049
- TERENCE HAZEL ET AL: "IEC switchgear & controlgear - internal arc withstand a designer's and user's view", PCIC EUROPE 2013, 1 June 2011 (2011-06-01), pages 1-12, XP055514149, ISSN: 2151-7665 ISBN: 978-1-4799-0097-8
- Jean-Francois Allan ET AL: "Robotic systems applied to power substations - A state-of-the-art survey", Proceedings of the 2014 3rd International Conference on Applied Robotics for the Power Industry, 1 January 2014 (2014-01-01), pages 1-6, XP055471456, DOI: 10.1109/CARPI.2014.7030049

## Description

The invention relates to a low voltage switchgear system provided for unmanned operation and maintenance

### Background

US 2013/0 231 779 A1 shows such a switchgear system and Jean-Francois Allan et al. in "Robotic systems Applied to Power Substations - A state of the Art Survey" disclose robotic systems equipped with visible, infrared or thermographic cameras.

Normally, well known switchgear systems are provided with sensors, in order to have control elements and sensors, connected via local data networks or via browsers, for technical diagnostic and stearing functions and or maintenance by that.

The scope of the inspection in switchgear systems provided for unmanned operation can be enhanced compared to the scope that is typically done by fixed sensors or manually on de-energized switchgear systems today. By enhancing the inspection scope periodic shutdown and testing of the switchgear system and its components can be avoided.

Systems like that, only can send sensor data for technical diagnosis, but maintenance of actual technical problems cannot be activated.

### Object of the invention

So the object of the invention is, to enhance such switchgear systems, as well as the method for operating the same as such, that a more detailed sensoring of technical faults is given, so that faults or deterioration of components that might lead to faults, and malfunctions can be located much more detailed and quickly, and at least first steps, over solving technical problems can be initiated automatically.

### Invention

Considering that a low voltage switchgear provided for unmanned operation and maintenance excludes human operators from operation and maintenance processes of the switchgear as we know them today.

So starting with the above mentioned object, and referring to a low voltage switchgear the solution is given by the invention, given by the features of claim 1. A method for operating such a low voltage switchgear system is also defined in claim 4.

Further advantageous embodiments are given by the depending claims.

Referring to a switchgear system, the invention is, that the low voltage switchgear system is provided for unmanned operation and maintenance with a robotic system and that the robotic system is provided with a camera system, and an image recognition system.

By adding a robotic system to the inner space of the switchgear, a new system serving the operation and maintenance functions of the switchgear was introduced. The robotic system and design of the switchgear internal space without segregations gives opportunity to collect much richer static and dynamic visual data about the primary and auxiliary circuits and mechanisms condition compared to today situation.

Collected rich visual data allow the application of automatized image processing and analysis with the target to learn the conditions of the switchgear systems and components.

Furthermore, by the use of the invention, the switchgear systems can react in cases of faults much quicker, and more effectively.

A further advantageous embodiment is, that the robotic system is provided with a data network or an external data communication interface.

In a further advantageous embodiment the camera has means for corresponding with a image recognition system, and to evaluate actual images with adaptive image data, in order to be able to locate and to analyse physical reasons for faults, or deterioration of components, that might lead to faults. The camera is provided with a video mode, by which the functional surveillance can be taken by slow motion video sequences.

In a further embodiment, not included in the scope of the claims, the robotic system is provided with a tool changing system, which may be used to change/switch between various tools for maintenance and service activites, in particular for detaching or attaching and/or exchanging switchgear components, like for example withdrawable modules and / or module components, connectors and the like, in an automated way.

Exemplary tools may be for example a gripper and/or screwdriver.

Furthermore, a tool storage may be provided to store and provide the various tools for the tool changing system of the robotic system.

Concerning to a method for operating such a switchgear, the low voltage switchgear system is provided for unmanned operation and maintenance with a robotic system, which is steered and/or controled at least partly by a software system, and that the robotic system is provided with a camera system, and an image recognition system, which is corresponding for technical diagnosis.

In a further embodiment the low voltage switchgear system comprises an externa housing and is provided for unmanned operation and maintenance with a robotic system, wherein the robotic system is provided with a camera and an image recognition system, which is corresponding for technical diagnosis.

Furthermore, the robotic system may be steered and/or controled at least partly by a housing internal and/or a housing external software system.

In a further advantageous embodiment of the invention, the robotic system is provided with a data network or external data communication interface, and that in case of detection of technical problems or malfunctions, referring messages are generated automatically and sent to an authorized external observation system.

Furthermore advantageous is an embodiment, in which the camera is provided with means for corresponding with an image recognition system, and to evaluate actual images with adaptive image data, in order to be able to locate and to analyse physical reasons for faults or deterioration of components that might lead to faults.

According to the invention, and as defined in the independent claims, the camera is provided with a video mode, by which the functional surveillance can be taken by slow motion video sequences, and analysed automatically with regular expected function sequences by comparison of slow motion video sequences from a adaptive data field, which show the expected regular function.
- Fig.1: Example crossection of switchgear provided for unmanned operation and maintenance, not according to the invention.
- Fig. 2: Example crossection of low voltage switchgear system provided for unmanned operation and maintenance according to the invention.

This invention disclosure describes the enhanced scope of robotized inspection of the switchgear provided for unmanned operation and maintenance.

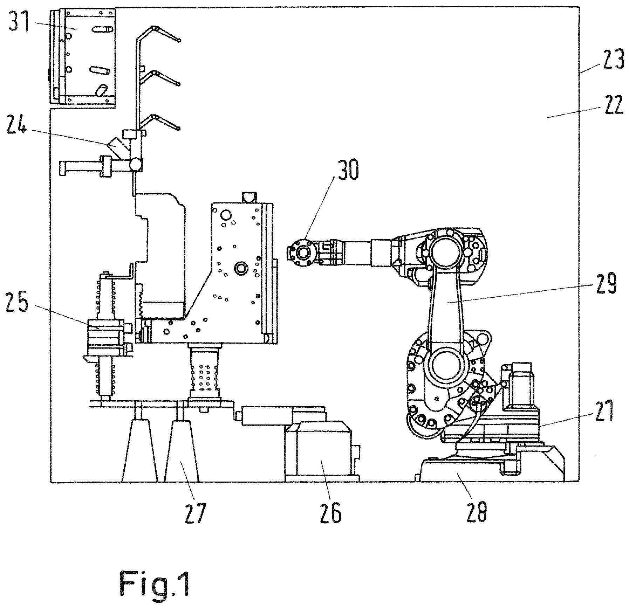

In Fig. 1 the robotic system 21 tooling includes in this embodiment sensors for visual inspection and thermographic inspection for the enhanced inspection of energized switchgear systems.

As the robotic manipulator 29 and wrist 30 is allowed to approach de-energized circuits only, all these sensors shall be non-contact type. The robotic arm and wrist can position the sensors to best shot positions without advanced pan, tilt, zoom functions on the sensors itself.

The visual inspection sensor in this embodiment is capable of taking high resolution picture as well as slow-motion video sequence recording. The data from visual inspection sensor and subsequent automatic image analysis algorithms shall be used for following inspection tasks:
- Detecting grime, corrosion, moisture on the primary circuits from high resolution static images
- Detecting traces of discharges or ruptures on the insulation surfaces from high resolution static images
- Detecting irregularities in movement of auxiliary mechanism during operation by slow-motion video sequence analysis
- Detecting irregularities in movement of switching device moving contact by slow-motion video sequence analysis

The sensors for thermographic inspection shall be capable of taking high resolution thermographic pictures of high emissivity surfaces. The primary circuits inside the switchgear system shall be preferably covered with thin high emissivity material wherever possible to allow accurate thermographic measurements.

The data from thermographic inspection sensor and subsequent automatic image analysis algorithms shall be used for following inspection tasks:
- Detecting hot spots on primary circuits from static thermographic images
- Detecting spots hotter than maximum allowed temperature on the primary circuits from static thermographic images
- Detecting hot spots on the auxiliary circuits from static thermography images
- Detecting points of high friction on the auxiliary mechanisms from static thermography images

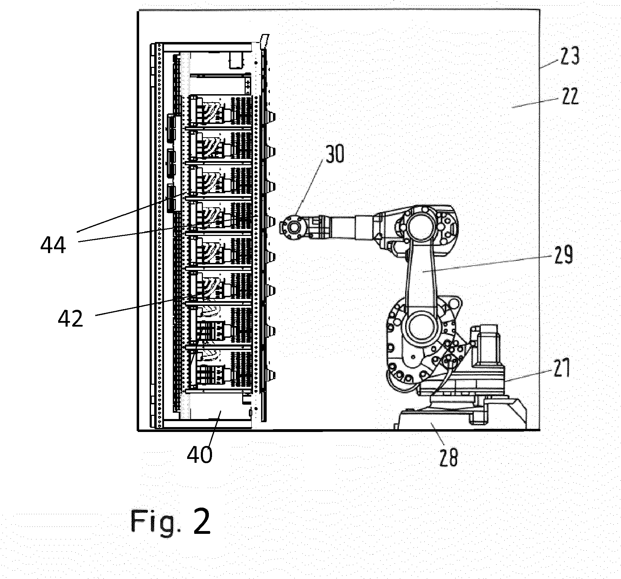

In Fig. 2 an embodiment of the invention is disclosed referring to a low voltage switchgear system provided for unmanned operation and maintenance.

The low voltage switchgear system comprises at least one switchgear 40 with a mounting frame 44 and several withdrawable modules 42.

The robotic system 21 tooling includes in this embodiment sensors for visual inspection and thermographic inspection for the enhanced inspection of energized low voltage switchgear. As the robotic manipulator 29 and wrist 30 is allowed to approach de-energized circuits only, all these sensors shall be non-contact type. The robotic arm and wrist can position the sensors to best shot positions without advanced pan, tilt, zoom functions on the sensors itself.

The visual inspection sensor in this embodiment is capable of taking high resolution picture as well as slow-motion video sequence recording. The data from visual inspection sensor and subsequent automatic image analysis algorithms shall be used for following inspection tasks:
- Detecting grime, corrosion, moisture on the primary circuits from high resolution static images
- Detecting traces of discharges or ruptures on the insulation surfaces from high resolution static images
- Detecting irregularities in movement of auxiliary mechanism during operation by slow-motion video sequence analysis
- Detecting irregularities in movement of switching device moving contact by slow-motion video sequence analysis

The sensors for thermographic inspection shall be capable of taking high resolution thermographic pictures of high emissivity surfaces. The primary circuits inside the switchgear shall be preferably covered with thin high emissivity material wherever possible to allow accurate thermographic measurements.

The data from thermographic inspection sensor and subsequent automatic image analysis algorithms shall be used for following inspection tasks:
- Detecting hot spots on primary circuits from static thermographic images
- Detecting spots hotter than maximum allowed temperature on the primary circuits from static thermographic images
- Detecting hot spots on the auxiliary circuits from static thermography images
- Detecting points of high friction on the auxiliary mechanisms from static thermography images

Advantageously, the robotic system can be provided with a tool changing system, which may be used to change/switch between various tools for maintenance and service activites, in particular for detaching or attaching and/or exchanging switchgear components, like for example withdrawable modules and / or module components, connectors and the like, in an automated manner.

## Claims

1. Low voltage switchgear system provided for unmanned operation and maintenance, comprising a switchgear (40) with a mounting frame (44) and several withdrawable modules (42), wherein the switchgear system is provided for unmanned operation and maintenance with a robotic system (21), wherein the robotic system (21) comprises a robotic manipulator (29) and wherein the robotic system (21) is provided with a camera system and an image recognition system,
**characterized in that**
the camera is provided with a video mode, by which the functional surveillance can be taken by slow motion video sequences.

2. Switchgear system according to claim 1, wherein the robotic system (21) is provided with a data network or an external data communication interface.

3. Switchgear system according to claim 1 or 2, wherein an external housing is provided containing the switchgear system.

4. Method for operating a low voltage switchgear system according to one of the claims 1 to 3, **characterized in that** the slow motion video sequences taken by the camera are analysed automatically by comparison with slow motion video sequences from an adaptive data field showing the expected regular functioning.

5. Method according to claim 4, wherein the robotic system (21) is provided with a data network or external data communication interface, and that in case of detection of technical problems or malfunctions, referring messages are generated automatically and sent to an authorized external observation system.

6. Method according to claim 4 or 5, wherein the image recognition system evaluates actual images with adaptive image data in order to locate and analyse physical reasons for faults or deterioration of components that might lead to faults.

## Patentansprüche

1. Niederspannungsschaltanlagensystem, bereitgestellt für unbemannten Betrieb und unbemannte Wartung, umfassend eine Schaltanlage (40) mit einem Montagerahmen (44) und mehreren herausnehmbaren Modulen (42), wobei das Schaltanlagensystem für einen unbemannten Betrieb und unbemannte Wartung mit einem Robotersystem (21) ausgestattet ist, wobei das Robotersystem (21) einen Robotermanipulator (29) umfasst und wobei das Robotersystem (21) mit einem Kamerasystem und einem Bilderkennungssystem ausgestattet ist,
**dadurch gekennzeichnet, dass**
die Kamera mit einem Videomodus ausgestattet ist, durch den die funktionale Überwachung durch langsame Bewegungsvideosequenzen erfolgen kann.

2. Schaltanlagensystem nach Anspruch 1, wobei das Robotersystem (21) mit einem Datennetzwerk oder einer externen Datenkommunikationsschnittstelle versehen ist.

3. Schaltanlagensystem nach Anspruch 1 oder 2, wobei ein externes Gehäuse vorgesehen ist, das das Schaltanlagensystem aufnimmt.

4. Verfahren zum Betreiben eines Niederspannungsschaltanlagensystems nach einem der Ansprüche 1 bis 3, **dadurch gekennzeichnet, dass** die durch die Kamera aufgenommenen langsamen Bewegungsvideosequenzen automatisch analysiert werden durch Vergleich mit langsamen Bewegungsvideosequenzen von einem adaptiven Datenfeld, das das erwartete regelmäßige Funktionieren zeigt.

5. Verfahren nach Anspruch 4, wobei das Robotersystem (21) mit einem Datennetzwerk oder einer externen Datenkommunikationsschnittstelle versehen ist, und dass im Fall einer Detektion von technischen Problemen oder Fehlfunktionen bezugnehmende Nachrichten automatisch generiert und an ein autorisiertes externes Beobachtungssystem gesendet werden.

6. Verfahren nach Anspruch 4 oder 5, wobei das Bilderkennungssystem tatsächliche Bilder mit adaptiven Bilddaten evaluiert, um physische Gründe für Fehler oder eine Verschlechterung von Komponenten zu lokalisieren und zu analysieren, die zu Fehlern führen könnten.

## Revendications

1. Système d'appareillage de commutation basse tension prévu pour une exploitation et une maintenance sans personnel, comprenant un appareillage de commutation (40) comportant un châssis de montage (44) et plusieurs modules extractibles (42), le système d'appareillage de commutation basse tension étant prévu pour une exploitation et une maintenance sans personnel au moyen d'un système robotique (21), le système robotique (21) comprenant un manipulateur robotique (29) et le système robotique (21) étant pourvu d'un système de caméra et d'un système de reconnaissance d'images,
**caractérisé en ce que**
la caméra est pourvue d'un mode vidéo permettant la réalisation de la surveillance fonctionnelle par des séquences vidéo au ralenti.

2. Système d'appareillage de commutation selon la revendication 1, dans lequel le système robotique (21) est pourvu d'un réseau de données ou d'une interface de communication de données externe.

3. Système d'appareillage de commutation selon la revendication 1 ou 2, dans lequel un carter externe est prévu pour contenir le système d'appareillage de commutation.

4. Procédé d'exploitation d'un système d'appareillage de commutation basse tension selon l'une des revendications 1 à 3, **caractérisé en ce que** les séquences vidéo au ralenti prises par la caméra sont analysées automatiquement par comparaison avec des séquences vidéo au ralenti issues d'un champ de données adaptatives montrant le fonctionnement normal attendu.

5. Procédé selon la revendication 4, dans lequel le système robotique (21) est pourvu d'un réseau de données ou d'une interface de communication de données externe et, en cas de détection de problèmes techniques ou de dysfonctionnements, des messages s'y référant sont générés automatiquement et envoyés à un système d'observation externe autorisé.

6. Procédé selon la revendication 4 ou 5, dans lequel le système de reconnaissance d'images évalue des images réelles avec des données d'image adaptatives afin de déceler et d'analyser des causes physiques de défauts ou d'une dégradation de composants susceptible d'occasionner des défauts.
